(19) Europäisches Patentamt
European Patent Office
Office européen des brevets

(11) **EP 3 026 750 A1**

(12) **EUROPÄISCHE PATENTANMELDUNG**

(43) Veröffentlichungstag:
**01.06.2016  Patentblatt 2016/22**

(21) Anmeldenummer: **14195458.6**

(22) Anmeldetag: **28.11.2014**

(51) Int Cl.:
*H01M 10/42* (2006.01)  *H01G 9/00* (2006.01)
*H01G 11/00* (2013.01)  *H01G 11/04* (2013.01)
*H01G 11/06* (2013.01)  *H01G 17/00* (2006.01)
*H01M 10/44* (2006.01)  *H01M 12/00* (2006.01)
*H01G 15/00* (2013.01)  *H01M 10/46* (2006.01)
*H02J 7/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Siemens Aktiengesellschaft
80333 München (DE)**

(72) Erfinder:
• **Kleffel, Rüdiger
91056 Erlangen (DE)**
• **Quast, Fabian
91058 Erlangen (DE)**
• **Ruppert, Swen
91096 Möhrendorf (DE)**

(54) **Verfahren zum Symmetrieren eines Energiespeichersystems**

(57)    Die Erfindung betrifft ein Verfahren zum Symmetrieren eines Energiespeichersystems (1), wobei das Energiespeichersystem (1) eine Reihenschaltung von Speichermodulen (2,21) umfasst, wobei die Reihenschaltung von Speichermodulen (2,21) mindestens zwei kapazitive Speichermodule (2) aufweist, wobei die kapazitiven Speichermodule (2) mit einer Symmetriervorrichtung (4) derart verbunden sind, dass mittels eines Stromflusses zwischen der Symmetriervorrichtung (4) und den kapazitiven Speichermodulen (2) jeweils eine Ladung der kapazitiven Speichermodule (2) beeinflussbar ist, wobei die kapazitiven Speichermodule (2) jeweils eine Kapazität ($C_i$) aufweisen. Für ein optimiertes Energieversorgungssystem wird ein Verfahren mit folgenden Schritten vorgeschlagen:

- Ermittlung jeweils der Kapazität ($C_i$) der kapazitiven Speichermodule (2),

- Bestimmung jeweils einer Modulladung ($Q_{eq\_i}$) für die kapazitiven Speichermodule (2) zumindest aus einer Spannung ($U_i$) des jeweiligen kapazitiven Speichermoduls (2) und einer vorgebbaren Symmetrierspannung ($U_{eq\_i}$),
- Bestimmung einer Referenzladung ($Q_{ref}$) zumindest aus den Modulladungen ($Q_{eq\_i}$) der kapazitiven Speichermodule (2),
- Bestimmung jeweils einer Symmetrierladung ($Q_{sym\_i}$) für die kapazitiven Speichermodule (2) zumindest aus der Referenzladung ($Q_{ref}$) und der Modulladung ($Q_{eq\_i}$) des jeweiligen kapazitiven Speichermoduls (2) und
- Beeinflussung jeweils der Ladung der kapazitiven Speichermodule (2) durch Austausch der jeweiligen Symmetrierladung ($Q_{sym\_i}$) zwischen dem jeweiligen kapazitiven Speichermodul (2) und der Symmetriervorrichtung (4).

FIG 2

**Beschreibung**

Die Erfindung betrifft ein Verfahren zum Symmetrieren eines Energiespeichersystems, wobei das Energiespeichersystem eine Reihenschaltung von Speichermodulen umfasst, wobei die Reihenschaltung von Speichermodulen mindestens zwei kapazitive Speichermodule aufweist, wobei die kapazitiven Speichermodule mit einer Symmetriervorrichtung derart verbunden sind, dass mittels eines Stromflusses zwischen der Symmetriervorrichtung und den kapazitiven Speichermodulen jeweils eine Ladung der kapazitiven Speichermodule beeinflussbar ist, wobei die kapazitiven Speichermodule jeweils eine Kapazität aufweisen. Die Erfindung betrifft weiter eine Steuervorrichtung zur Durchführung des Verfahrens sowie eine Energiespeicheranordnung mit einer Steuervorrichtung.

Bei dem Symmetrieren eines Energiespeichersystems geht es darum, einzelne Speichermodule in ihrer Spannung zu beeinflussen. Bei den einzelnen Speichermodulen handelt sich um Energiespeicher, wie beispielsweise Kondensatoren, insbesondere Doppelschichtkondensatoren (UltraCaps), oder Batterien. Kondensatoren oder Doppelschichtkondensatoren werden auch als kapazitive Energiespeicher bezeichnet. Weitere Energiespeicher, die der Gruppe der kapazitiven Energiespeicher zugeordnet werden können, sind beispielsweise Lithium-Kondensatoren. Auch sonstige Hybridspeicher, oftmals als Mischspeicher bezeichnet, die zumindest teilweise ein kapazitives Verhalten aufweisen, können zu den kapazitiven Energiespeichern zugeordnet werden. Analog dazu werden aus diesen Komponenten aufgebaute Speichermodule als kapazitive Speichermodule bezeichnet. Bei den betrachteten Energiespeichersystemen sind die einzelnen Speichermodule in einer Reihenschaltung, auch als Serienschaltung bezeichnet, angeordnet. Die Aufgabe des Symmetrierens besteht darin, in einem Betriebszustand an den Anschlussklemmen der einzelnen Speichermodule eine vorgebbare Spannung zu erzeugen. Beispielsweise sollen im geladenen Zustand alle Speichermodule an ihren Anschlussklemmen die Maximalspannung annehmen. Damit wird verhindert, dass einzelne Zellen dieser Reihenschaltung höhere Spannung annehmen als andere und damit die zulässige Maximalspannung des einzelnen Speichermoduls überschritten wird. Eine Überschreitung der Maximalspannung bedeutet eine Überladung des entsprechenden Speichermoduls und führt zu einem deutlich stärkeren Altern des entsprechenden Speichermoduls. Die Symmetrierung soll während des normalen Betriebs stattfinden. Ebenso ist es notwendig, bei einer vollständigen Entladung alle Speichermodule auf die Spannung Null zu bringen. Das Symmetrieren dient darüber hinaus dazu, ein Umladen einzelner Speichermodule auf negative Spannung beim Entladen zu verhindern.

Die unterschiedlichen Spannungen im Betrieb der einzelnen kapazitiven Speichermodule werden unter anderem durch eine unterschiedliche Kapazität der Speichermodule verursacht. Diese kann beispielsweise durch Alterungsprozesse der kapazitiven Speichermodule hervorgerufen werden. Dabei nimmt üblicherweise die Kapazität von Speichermodulen mit zunehmendem Alter ab. Die Abnahme der Kapazität wird durch Betriebs- und Umweltbedingungen beeinflusst, wie beispielsweise Spannung und Temperatur.

Eine übliche Methode bei der Symmetrierung besteht darin, beim Überschreiten eines bestimmten Schwellwertes der Spannung des Speichermoduls einen Symmetrierwiderstand parallel zum Speichermodul zu schalten um damit die Spannung des Speichermoduls zu beeinflussen. Damit kann in einem Zustand, wie beispielsweise der Maximalladung, eine Symmetrierung durchgeführt werden. Im Zustand der Maximalladung weisen dann alle Speichermodule die Maximalspannung auf. Ebenso können über diese Symmetrierwiderstände die einzelnen Speichermodule vollständig auf die Spannung Null entladen werden.

Ebenso sind Schaltungen bekannt, bei denen die Ladung aus den Speichermodulen zum Zwecke der Symmetrierung nicht einem Symmetrierwiderstand zugeführt wird, sondern ein Austausch von Ladungen zwischen den einzelnen Speichermodulen stattfindet.

Der Erfindung liegt die Aufgabe zugrunde, ein optimiertes Verfahren zum Symmetrieren eines Energiespeichersystems anzugeben.

Diese Aufgabe wird durch ein Verfahren zum Symmetrieren eines Energiespeichersystems gelöst, wobei das Energiespeichersystem eine Reihenschaltung von Speichermodulen umfasst, wobei die Reihenschaltung von Speichermodulen mindestens zwei kapazitive Speichermodule aufweist, wobei die kapazitiven Speichermodule mit einer Symmetriervorrichtung derart verbunden sind, dass mittels eines Stromflusses zwischen der Symmetriervorrichtung und den kapazitiven Speichermodulen jeweils eine Ladung der kapazitiven Speichermodule beeinflussbar ist, wobei die kapazitiven Speichermodule jeweils eine Kapazität aufweisen, wobei das Verfahren die folgenden Schritte umfasst:

- Ermittlung jeweils der Kapazität der kapazitiven Speichermodule,
- Bestimmung jeweils einer Modulladung für die kapazitiven Speichermodule zumindest aus einer Spannung des jeweiligen kapazitiven Speichermoduls und einer vorgebbaren Symmetrierspannung,
- Bestimmung einer Referenzladung zumindest aus den Modulladungen der kapazitiven Speichermodule,
- Bestimmung jeweils einer Symmetrierladung für die kapazitiven Speichermodule zumindest aus der Referenzladung und der Modulladung des jeweiligen kapazitiven Speichermoduls und
- Beeinflussung jeweils der Ladung der kapazitiven Speichermodule durch Austausch der jeweiligen Symmetrierladung zwischen dem jeweiligen kapazitiven Speichermodul und der Symmetriervorrichtung.

Diese Aufgabe wird weiter durch eine Steuervorrichtung zur Durchführung des Verfahrens sowie durch eine Energiespeicheranordnung mit einer Reihenschaltung von Speichermodulen und einer Steuervorrichtung gelöst. Diese Aufgabe wird weiter durch ein Fahrzeug mit einer solchen Energiespeicheranordnung gelöst.

Der Erfindung liegt die Erkenntnis zugrunde, dass sich die Symmetrierung von Speichermodulen, die in einer Reihenschaltung angeordnet sind, auf einfacher Weise durch Betrachtung der elektrischen Ladung durchführen lässt. Der physikalische Zusammenhang zwischen Ladung $Q_i$ und Spannung $U_i$ eines kapazitiven Speichermoduls lautet:

$$Q_i = C_i \cdot U_i$$

Durch die unterschiedlichen Kapazitäten $C_i$ der einzelnen kapazitiven Speichermodule und aufgrund eventuell bereits vorhandener unterschiedlicher Anfangsladungen unterscheiden sich die Spannungen der einzelnen kapazitiven Speichermodule wenn sie mit der gleichen Ladung geladen werden. Die gleiche Ladung ergibt sich daraus, dass die Speichermodule in der Anordnung der Reihenschaltung vom gleichen Strom durchflossen werden. Ziel des Symmetrierens ist nun, die Spannung der einzelnen kapazitiven Speichermodule derart zu beeinflussen, dass in einem Arbeitspunkt die einzelnen Speichermodule jeweils eine vorgebbare Symmetrierspannung annehmen. Die Symmetrierspannung der einzelnen kapazitiven Speichermodule muss nicht zwangsläufig gleich sein. Vielmehr können sich die einzelnen Symmetrierspannungen der einzelnen Speichermodule voneinander unterscheiden.

In einem ersten Schritt wird bei der Symmetrierung die Kapazität der einzelnen in Reihe angeordneten kapazitiven Speichermodule ermittelt. Der Wert der Kapazität der einzelnen kapazitiven Speichermodule wird dabei oftmals schon zur Bestimmung des Alterungszustands der einzelnen Speichermodule ermittelt. Dieser Wert kann für das Verfahren zum Symmetrieren genutzt werden. Es ist auch möglich, die Kapazität in einem ersten Schritt mittels Schätzungen zu bestimmen. Dazu kann in beispielsweise der Nominalwert der Kapazität herangezogen werden. Dieser Wert kann dann schrittweise über die Zeit genauer bestimmt werden. Dabei bietet sich an, die Bestimmung der Kapazität zu wiederholen, insbesondere zyklisch zu wiederholen.

Ergänzend oder alternativ kann die Kapazität auch über die Ladung und über die Spannung am kapazitiven Speichermodul ermittelt werden. Die Ladung ist dabei das Integral des Stromes über der Zeit, so dass der Strom durch die kapazitiven Speichermodule und die Spannung der einzelnen Speichermodule für die Ermittlung der Kapazität der jeweiligen Speichermodule verwendet werden kann. Aus diesen Werten ist es möglich, die Kapazität der einzelnen Speichermodule mit hinreichender Genauigkeit zu ermitteln. Dabei hat es sich als vorteilhaft erwiesen, beim ersten Aufladen des Speichermoduls, auch als Hochlauf bezeichnet, die Kapazität $C_i$ der einzelnen Speichermodule zu bestimmen.

Da die Kapazität auch für einige Energiespeicher arbeitspunktabhängig, z.B. nichtlinear, ist, ist es auch ergänzend oder alternativ möglich, die Kapazität der Speichermodule, über vorher bestimmte Kennlinien oder Tabellen zu ermitteln oder zu berücksichtigen. Auch für den Fall, dass die Kapazität von der Spannung des Speichermoduls abhängig ist, hat sich dieses Verfahren als vorteilhaft erwiesen. Diese Ermittlung kann im Anschluss durch Messungen, beispielsweise wie oben oder in den Unteransprüchen beschrieben, optimiert und verbessert werden.

In einem zweiten Schritt wird für die einzelnen kapazitiven Speichermodule die Modulladung $Q_{eq\_i}$ ermittelt, die benötigt wird, um das entsprechende kapazitive Speichermodul von der derzeit anliegenden Spannung $U_i$ auf die vorgebbare Symmetrierspannung $U_{eq\_i}$ zu verändern. Der Index i beschreibt dabei das i-te Speichermodul. Daraus ergibt sich die Modulladung $Q_{eq\_i}$ zu

$$Q_{eq\_i} = C_i \cdot \left( U_{eq\_i} - U_i \right).$$

Aufgrund unterschiedlicher Werte der Kapazität der einzelnen Speichermodule können sich auch bei gleicher Spannungsdifferenz unterschiedliche Modulladungen für die jeweiligen kapazitiven Speichermodule ergeben.

Aus den einzelnen Modulladungen wird in einem dritten Schritt eine Referenzladung $Q_{ref}$ bestimmt. Die Bestimmung der Referenzladung ist unter anderem davon abhängig, wie die Symmetriervorrichtung ausgebildet ist. Als besonders vorteilhaft hat sich bei der Symmetrierung mit Widerständen die Bildung der Referenzladung aus dem Maximum der Modulladungen erwiesen. Damit ergibt sich die Referenzladung zu

$$Q_{ref} = \text{Max}\left[ C_i \cdot \left( U_{eq\_i} - U_i \right) \right]$$

Für den Fall, dass eine Symmetrierung durch Ladungsaustausch zwischen den einzelnen kapazitiven Speichermodulen erfolgt, hat sich die Bestimmung der Referenzladung als Mittelwert der Modulladungen über die Formel

$$Q_{ref} = \overline{\left[ C_i \cdot \left( U_{eq\_i} - U_i \right) \right]}$$

als günstig herausgestellt. Die Symmetrierung durch Ladungsaustausch zwischen den einzelnen kapazitiven Speichermodulen wird auch als Symmetrieren mittels Umladeschaltung bezeichnet.

In einem vierten Schritt wird aus der Referenzladung und der Modulladung der einzelnen kapazitiven Speichermodule die Symmetrierladung bestimmt. Beispielsweise kann die Symmetrierladung aus der Differenz zwischen Referenzladung und Modulladung bestimmt werden. Darüber hinaus können auch noch weitere Größen, wie beispielsweise eine Toleranz für die Symmetrierspannung in die Bestimmung eingehen. Durch diese Toleranz lässt sich der Aufwand für die Durchführung des Verfahrens nochmals reduzieren. Ebenso ist es möglich, entstehende Verluste zu verringern, um eine effiziente und verlustarme Symmetrierung durchzuführen.

In einem fünften Schritt wird die bestimmte Symmetrierladung zwischen dem jeweiligen kapazitiven Speichermodul und der Symmetriervorrichtung ausgetauscht. Ein besonderer Vorteil des Verfahrens ist dabei, dass die Symmetrierung in jedem Betriebszustand durchgeführt werden kann. Beim bekannten Verfahren aus dem Stand der Technik wird die Symmetrierung erst dann aktiv, wenn eine oder mehrere Schwellen über-/ oder unterschritten sind. Das ist dann der Fall, wenn sich der Betriebszustand des Systems in der Nähe des Zustandes befindet, der symmetriert werden soll. Bei dem erfindungsgemäßen Verfahren hingegen ist auch eine Symmetrierung möglich, bevor der Betriebszustand erreicht wird, bei dem die Speichermodule die Symmetrierspannung aufweisen. Damit ist ein vorausschauendes Symmetrieren erreichbar. Der symmetrierte Zustand ist dann erreicht, wenn die Symmetrierladung $Q_{sym\_i}$ der einzelnen Speichermodule zu Null geworden ist, unabhängig davon, welche Spannung $U_i$ die Speichermodule momentan aufweisen.

Mit dem erfindungsgemäßen Verfahren kann eine Symmetrierung in jedem beliebigen Betriebszustand vorausschauend, d.h. im Vorfeld, vor Erreichen der Symmetrierspannung $U_{eq\_i}$ erfolgen. Damit ist es möglich, bei beliebiger Spannung und in einem beliebigen Betriebszustand das Gesamtsystem aus Speichermodulen in einen Zustand zu bringen, der nach der Symmetrierung derart vorbereitet ist, auf die Symmetrierspannung geladen zu werden. Im symmetrierten Zustand können die Modulspannungen für den Fall, dass sie ungleich der Symmetrierspannung sind, stärker voneinander abweichen als im nicht symmetrierten Zustand. Entscheidend ist jedoch der Fall der Aufladung auf die Symmetrierspannung. Diese Symmetrierspannung kann für die einzelnen Speichermodule beliebig und unabhängig voneinander festgelegt werden. So ist es möglich, die Symmetrierspannung auf die Maximalspannung der Speichermodule festzulegen. Nützlich ist aber auch die Symmetrierspannung zu einem anderen Zeitpunkt auf null zu verändern, beispielsweise wenn eine Entladung vorbereitet werden soll. Wird ein System aus dem vollständig entladenen Zustand hochgefahren, ist es sinnvoll, möglichst bald, also schon bei niedrigen Spannungen eine Symmetrierung auf die Symmetrierspannung wie beispielsweise der Maximalspannung nach diesem Verfahren durchzuführen. Damit wird im System erreicht, dass schon beim erstmaligen Erreichen der Maximalspannung symmetrische Verhältnisse vorliegen. Ein Überschreiten der Maximalspannung und eine damit verbundene Überladung eines einzelnen oder mehrerer Module kann damit zuverlässig verhindert werden. Durch das Verhindern der Überschreitung von der Maximalspannung der einzelnen Speichermodule ergibt sich ein weiterer Vorteil dadurch, dass der nutzbare Energieinhalt der einzelnen Speichermodule größer ist als im nicht symmetrierten Zustand. Die Anwendung des erfindungsgemäßen Verfahrens ermöglicht es, diesen Vorteil zu nutzen, ohne dass die einzelnen Speichermodule über einen bestimmten, teilweise auch längeren Zeitraum, die Maximalspannung annehmen müssen.

Mit einer Referenzladung ungleich Null kann schon vor Erreichen eines bestimmten Zustandes die Symmetrierung aktiv oder sogar abgeschlossen sein. Durch diese vorausschauende Symmetrierung ist ein schnelles Symmetrieren auch mit relativ geringen Strömen möglich. Die Symmetrierschaltung kann wegen der Dimensionierung auf kleine Ströme deutlich kostengünstiger aufgebaut werden.

Ein Energiespeichersystem wird dann als symmetriert bezeichnet, wenn sich die Symmetrierspannung $U_{eq\_i}$ der einzelnen Speichermodule durch den Strom durch die Reihenschaltung erreichbar ist, ohne dass die Symmetriervorrichtung aktiv werden muss. In diesem Fall sind die Symmetrierladungen gleich null. Damit ist das Energiespeichersystem auch dann im symmetrierten Zustand, wenn die Symmetrierspannung noch nicht erreicht ist.

Mit dem erfindungsgemäßen Verfahren ist es ebenfalls möglich, bei einer Vorgabe der Symmetrierspannung von Null, ein Entladen der Speichermodule vorzubereiten, auch wenn der Speicher noch im Betrieb ist. Ein Umladen, d.h. ein Vorzeichenwechsel in der Klemmenspannung eines Speichermoduls, während eines Entladevorgangs kann durch die Anwendung des erfindungsgemäßen Verfahrens zuverlässig verhindert werden. Dieses ist insofern von Bedeutung, dass ein Umladen eines Speichermoduls zu einer schnelleren Alterung des betroffenen Speichermoduls führen kann. Durch das erfindungsgemäße Verfahren kann ein spannungsloser Zustand schnell, teilweise sogar unmittelbar nach Abschalten des Energiespeichersystems erreicht werden. Damit kann ein sicherer Umgang des Wartungspersonals mit dem dann vollständig entladenen Energiespeicher sichergestellt werden.

Das erfindungsgemäße Verfahren hat darüber hinaus den Vorteil, dass die Symmetrierung zu jedem Spannungszustand durchführbar ist. Darüber hinaus ist die Symmetrierung in jedem beliebigen Zeitraum durchführbar, so dass die Symmetrierung auch über einen sehr langen Zeitraum mit geringen Strömen durchgeführt werden kann. Die abzuführende Verlustleistung ist damit sehr gering. Ein weiterer Vorteil liegt darin, dass alle kapazitiven Speichermodule gleichzeitig symmetrierbar sind. Damit kann das erfindungsgemäße Verfahren die kapazitiven Speichermodule gleichzeitig symmetrieren. Die Symmetrierung kann durch einen Mikroprozessor gesteuert sehr exakt durchgeführt werden, wenn die Spannungserfassung entsprechend genau ist. Damit wird nur wenig elektrische Energie in Widerständen verschwendet. Der symmetrierte Zustand kann bei beliebigem Spannungsniveau erreicht werden. So insbesondere bei einer Spannung von Null sowie bei Maximalspannung. Die Symmetrierspannung kann jederzeit verändert und damit neu vorgegeben werden. Das Symmetrieren kann schon vorausschauend durchgeführt werden, auch wenn die Spannung bei den symmetrischen Verhältnissen vorliegen sollen, noch nicht erreicht ist. Dies ist insbesondere beim Hochlauf aus dem entladenen Zustand sinnvoll, bei der bei unterschiedlicher Kapazität der Speichermodule unvermeidlich ein Spannungsunterschied auftritt. Um unnötig häufig wiederholtes Symmetrieren aufgrund von Ungenauigkeiten zu vermeiden, kann die Symmetrierung mit einer beliebigen Toleranz versehen werden. Damit kann die Verlustenergie gering gehalten werden. Ein bei dem aus dem Stand der Technik bekannten Verfahren notwendiges Nachladen der Speichermodule an der Maximalspannungsgrenze ist beim erfindungsgemäßen Verfahren nicht erforderlich. Damit ist auch keine verlustbehaftete Energiequelle notwendig. Die Berechnung der Ladehäufigkeit und Entladeleistung sowie der Entladeenergie der einzelnen Speichermodule ist durch Summation über das Gesamtsystem möglich. Daraus können statistisch Verlustfaktoren sowie Trends zur Alterung bestimmt werden.

Als besonders vorteilhaft hat es sich erwiesen ein Fahrzeug, insbesondere einen Bus oder ein Schienenfahrzeug einer Energiespeicheranordnung auszustatten. Durch die vielen Lastzyklen mit Anfahr- und Bremsvorgängen kann sich der Einsatz des Energiespeichers positiv auf den Energieverbrauch auswirken. Das erfindungsgemäße Verfahren sichert eine hohe Ausnutzung des Energiespeichersystems, so dass dieses entsprechend kompakt dimensioniert und in den zur Verfügung stehenden Bauraum, der in Fahrzeugen oftmals klein ausfällt, integriert werden kann.

Vorteilhafte Ausgestaltungen der Erfindung sind in den abhängigen Ansprüchen angegeben.

Bei einer vorteilhaften Ausgestaltungsform des Verfahrens sind die Symmetrierspannungen der einzelnen kapazitiven Speichermodule unabhängig voneinander vorgebbar. Dabei kann einzelnen oder jedem kapazitiven Speichermodul eine eigene Symmetrierspannung unabhängig von der Symmetrierspannung der anderen kapazitiven Speichermodule vorgegeben werden. Die Symmetrierspannung der einzelnen Speichermodule können identisch sein oder sich jeweils unterscheiden. Damit können auch Speichermodule in einer Reihenschaltung betrieben werden, die einen unterschiedlichen Aufbau und/oder unterschiedliche Maximalspannungen, z.B. durch Alterung, aufweisen. Auch kann über die Zeit den einzelnen kapazitiven Speichermodulen eine sich ändernde Symmetrierspannung vorgegeben werden. Die Änderung kann für die kapazitiven Speichermodule gleichzeitig oder auch im zeitlichen Versatz durchgeführt werden. Insbesondere hat es sich als günstig erwiesen, die Maximalspannung des Speichermoduls als Symmetrierspannung vorzugeben. Darüber hinaus oder alternativ hat es sich als günstig erwiesen, die Symmetrierspannung der einzelnen Speichermodule auf null zu setzen, wenn ein Abschalten des Energiespeichersystems abzusehen ist oder ein Fehler im Energiespeichersystem detektiert wird.

Bei einer weiteren vorteilhaften Ausgestaltungsform wird die Referenzladung durch den Maximalwert der Modulladungen gebildet. Dies ist insbesondere dann von Vorteil, wenn die Symmetriervorrichtung einen Widerstand aufweist. Durch den Widerstand kann die Ladung des Speichermoduls nur verringert und nicht vergrößert werden. Wählt man die Referenzladung als Maximum der Modulladungen so ist für den Symmetriervorgang aus den Speichermodulen nur Ladung herauszuführen, die im Widerstand in Wärme umgesetzt wird. Durch die Wahl der Referenzladung als Maximum der Modulladungen muss bei keinem der Speichermodule mittels der Symmetriervorrichtung Ladungen den Speichermodulen zugeführt werden. Für diese Wahl der Referenzspannung ist die Symmetrierung mit einem Widerstand besonders einfach und kostengünstig sowie zuverlässig realisierbar.

Bei einer weiteren vorteilhaften Ausgestaltungsform wird die Referenzladung durch den Mittelwert der Modulladungen gebildet. Die Mittelwertbildung der Modulladungen zur Bestimmung der Referenzladung ist von besonderem Vorteil, falls es möglich ist, mittels der Symmetriervorrichtung Ladungen zwischen den einzelnen kapazitiven Speichermodulen auszutauschen. Diese Symmetrievorrichtung wird auch als Symmetrierumladeschaltung bezeichnet. Die Symmetrierladungen lassen sich dann so bestimmen, dass die Summe der Beträge der positiven Symmetrierladungen gleich der Summe der Beträge der negativen Symmetrierladungen ist. Damit muss der Symmetriervorrichtung weder Energie von außen zugeführt werden noch besteht der Bedarf, elektrische Energie aus den Speichermodulen zu vernichten, bzw. in Wärme umzusetzen. Dadurch ist diese Ausgestaltungsform besonders verlustarm. Die geringen Verluste führen zu einem wirtschaftlichen Einsatz des Verfahrens. Insbesondere für sich häufig ändernde Symmetrierspannungen ist diese Ausgestaltungsform aufgrund ihrer geringen Verluste besonders wirtschaftlich einsetzbar.

Bei einer weiteren vorteilhaften Ausgestaltungsform wird jeweils die Kapazität der einzelnen kapazitiven Speichermodule aus der Änderung der Spannung des jeweiligen kapazitiven Speichermoduls und des Stromes durch die Reihenschaltung der kapazitiven Speichermodule bestimmt. Falls die Kapazitäten nicht bereits aus einer Lebensdauerbetrachtung zur Verfügung steht, die den Alterungszustand der einzelnen kapazitiven Speichermodule anhand ihrer Kapazität überwacht kann auf besonders einfache Weise die Kapazität der einzelnen Speichermodule aus der Spannung des Speichermoduls und dem dadurch fließenden Strom bestimmt werden. Wenn für das jeweilige Speichermodul kein Ladungsaustausch mit der Symmetriervorrichtung stattfindet, entspricht der Strom durch das Speichermodul gleich dem Strom der in der Reihenschaltung der Speichermodule fließt. Die Spannung der Speichermodule ist zur Durchführung des Verfahrens einer entsprechenden Regeleinrichtung bereits bekannt. Zum Schutz des Energiespeichersystems hat es sich als sinnvoll erwiesen, auch den Strom durch die Reihenschaltung der Speichermodule zu erfassen. Dadurch können Überlastungen der Speichermodule und gegebenenfalls damit einhergehende mögliche thermische Beschädigungen frühzeitig erkannt und vermieden werden. Aus dem Quotienten des Stromes durch die Reihenschaltung der Speichermodule und der Änderung der Spannung des jeweiligen Speichermoduls lässt sich auf einfache Weise die Kapazität des jeweiligen Speichermoduls schnell und zuverlässig bestimmen.

Bei einer weiteren vorteilhaften Ausgestaltungsform sind die einzelnen kapazitiven Speichermodule jeweils mit einem Widerstand verknüpft, wobei die Kapazität der einzelnen kapazitiven Speichermodule aus der Spannung des jeweiligen kapazitiven Speichermoduls oder aus einem Strom durch den Widerstand bestimmt wird. Da oftmals die Symmetriervorrichtung einen Widerstand aufweist, kann dieser einfach für die Kapazitätsermittlung genutzt werden. Aus der Spannung, insbesondere aus dem zeitlichen Verlauf der Spannung, am kapazitiven Speichermodul lässt sich die Kapazität des Speichermoduls bestimmen, wenn der Widerstandswert des parallel angeordneten Widerstandes bekannt ist. Dies kann beispielsweise über die Zeitkonstante geschehen, die sich als Produkt des Widerstandswertes und der Kapazität des Speichermoduls ergibt. Die Zeitkonstante kann dem zeitlichen Verlauf der Spannung des kapazitiven Speichermoduls, insbesondere aus der Steigung der Spannung, oder aus dem zeitlichen Verlauf des Stromes durch den Widerstand entnommen werden. Vorteil dieses Verfahrens ist, dass lediglich eine Messstelle, die Spannung am Speichermodul ausgewertet werden muss um zuverlässig die Kapazität zu ermitteln. Damit ist das Verfahren wenig störanfällig. Ein Widerstand ist für die Steuerung der Ladung oder für das sichere Entladen des Speichermoduls oftmals bereits vorhanden, so dass die Kapazitätsermittlung mit bereits vorhandenen Komponenten und Messeinrichtungen auf besonders einfache Weise durchgeführt werden kann.

Bei einer weiteren vorteilhaften Ausgestaltungsform erfolgt die Bestimmung der Symmetrierladung für die kapazitiven Speichermodule aus der Differenz zwischen der Referenzladung und der Modulladung des jeweiligen kapazitiven Speichermoduls. Bei diesem Verfahren wird die Symmetrierladung auf besonders einfache Weise bestimmt. Dieses Verfahren kann sowohl verwendet werden, wenn zur Symmetrierung der Speichermodule ein Widerstand verwendet wird, als auch für eine Umladung der Ladungen zwischen den einzelnen Speichermodulen, beispielsweise mittels Stromquellen. Übersteigt die Modulladung den Wert der Referenzladung so ist dem jeweiligen Speichermodul Ladung um den Betrag der Symmetrierladung hinzuzufügen. Im Fall, dass die Referenzladung den Wert der Modulspannung übersteigt, so ist dem Speichermodul der Betrieb der Symmetrierladung zu entnehmen. Die mathematische Operation der Differenzbildung ist auf besonders einfache Weise durch ein entsprechendes Mittel zur Berechnung, insbesondere einem Mikroprozessor der Regelung/Steuerung durchführbar, so dass ein entsprechender Aufbau für die Durchführung des Verfahrens einfach und kostengünstig herstellbar ist.

Bei einer weiteren vorteilhaften Ausgestaltungsform wird die Symmetrierladung für die kapazitiven Speichermodule in Abhängigkeit von einem vorgebbaren Toleranzband der Symmetrierspannung bestimmt. Das Toleranzband kann dazu genutzt werden, sich Freiheitsgrade in der Regelung zu verschaffen. Beispielsweise ist es möglich, auf die Absenkung einer Spannung eines Speichermoduls durch Einschalten von einem oder mehreren Widerstände zu verzichten, um damit die elektrischen Verluste des Symmetriervorgangs zu reduzieren. Ebenso kann bei einer Symmetriervorrichtung, die den Austausch von Ladungen zwischen Speichermodulen ermöglicht, auf Ladungsaustausch und damit einhergehenden elektrischen Verlusten verzichtet werden, wenn die sich ergebende Spannung der Speichermodule in einem vorgebbaren Toleranzband um die Symmetrierspannung liegt. Damit können häufige Eingriffe der Symmetriervorrichtung vermieden werden, ohne dadurch eine zu hohe Abweichung von der vorgegebenen Symmetrierspannung in Kauf nehmen zu müssen. Dies kann die Belastung von Stellgliedern der Symmetriervorrichtung verringern und führt damit zu einer hohen Lebensdauer der Symmetriervorrichtung. Diese Ausgestaltungsform ermöglicht es darüber hinaus, Ströme zwischen den Speichermodulen und der Symmetriervorrichtung zu reduzieren und damit Verluste im Betrieb zu minimieren und die effizient des Energiespeichersystems zu steigern. Die geringe Verlustleistung hat den energetischen Vorteil, dass weniger thermische Verluste abgeführt werden müssen, da unnötig häufiges Symmetrieren, insbesondere auch aufgrund von Ungenauigkeiten im System vermieden werden.

In einer vorteilhaften Ausgestaltungsform werden mittels der Symmetriervorrichtungen Ladungen zwischen den kapazitiven Speichermodulen ausgetauscht. Für den Fall, dass es möglich ist, Ladung zwischen den Speichermodulen auszutauschen, können die Verluste der Symmetrierung vollständig, zumindest aber signifikant oder zumindest teilweise, reduziert werden. Durch geeignete Wahl der Referenzladung, insbesondere durch die Bestimmung der Referenzladung als Mittelwert der Modulladungen, kann der Einsatz von Widerständen und die damit einhergehenden elektrischen Verluste vermieden werden oder zumindest reduziert werden. Somit fallen auch keine oder nur geringe ohmsche Verluste an. Der Aufwand für die Kühlung und die Anforderung, insbesondere in Bezug auf die thermische Belastbarkeit, an vorhandene Widerstände kann teilweise deutlich reduziert werden. Dies führt zu geringen Kosten im Aufbau und Betrieb eines entsprechenden Energiespeichersystems.

In einer weiteren vorteilhaften Ausgestaltungsform erfolgt die Vorgabe der Symmetrierspannung der einzelnen kapazitiven Speichermodule in Abhängigkeit von einem vorgebbaren Wartungsintervall und/oder von der Kapazität der jeweiligen kapazitiven Speichermodule. Die Alterung von Speichermodulen äußert sich unter anderem in einer sich verringernden Kapazität des betreffenden Speichermoduls. Durch die verringerte Kapazität erhöhen sich die Spannungsschwankungen. Dabei führen die höheren Spannungen aus den Maximalwerten der Spannungsschwankungen und die höhere Temperatur aufgrund der höheren Ströme, hervorgerufen durch die Minimalwerte der Spannungsschwankungen zu einem stärkeren Alterungsprozess der Speichermodule. Dieser Alterungsprozess führt zu einer weiteren Verringerung der Kapazität. Um der Alterung entgegenzuwirken, können die entsprechenden Speichermodule mit einer geringeren Spannung betrieben werden. Dies verlangsamt den Prozess der Alterung. Bei einem vorgegebenen Kriterium für das Ende der Lebensdauer, beispielsweise durch die Definition einer bestimmten Mindestkapazität, bei der ein Austausch des betreffenden Speichermoduls zu erfolgen hat, kann das Erreichen des Lebensendes durch eine geringere Betriebsspannung hinausgezögert werden. Dazu wird die vorgebbare Symmetrierspannung des jeweiligen kapazitiven Speichermoduls entsprechend niedriger gewählt. Durch diese Maßnahme verlangsamt sich der Alterungsprozess. Durch die Vorgabe unterschiedlicher Symmetrierspannungen $U_{eq\_i}$ für die einzelnen kapazitiven Speichermodule kann der Alterungsprozess der einzelnen Speichermodule so angeglichen werden, dass diese in gleichem Maße altern. Bei einem vorgegebenen Wartungsintervall kann die Verlangsamung des Alterungsprozesses über die reduzierte Symmetrierspannung derart angepasst werden, dass außerplanmäßige Wartung entfallen oder zumindest deutlich reduziert werden kann. Ebenso führt eine Berücksichtigung der Alterung der Speichermodule zu einer geringeren Ausfallwahrscheinlichkeit der einzelnen Speichermodule. Die damit gewonnene höhere Zuverlässigkeit führt zu einem wirtschaftlichen Betrieb des Energiespeichersystems.

Bei einer weiteren vorteilhaften Ausgestaltungsform weist die Symmetriervorrichtung einen Widerstand auf. Der Widerstand ist eine besonders kostengünstige Möglichkeit, die Ladung eines Speichermoduls zu beeinflussen. Es hat sich als vorteilhaft erwiesen, zur Steuerung/Regelung des Stromes durch den Widerstand einen Schalter als Stellglied vorzusehen. Dabei kann es sich um einen mechanischen, elektronischen oder leistungselektronischen Schalter, insbesondere um einen Transistor, handeln. Mit dieser Anordnung ist die Symmetrierung auf besonders einfache Weise durchführbar. Darüber hinaus kann aus dem Lade-/Entladeverlauf auch auf besonders einfache und zuverlässige Weise die Kapazität des Speichermoduls zuverlässig ermittelt werden.

Bei einer weiteren vorteilhaften Ausgestaltungsform weist die Symmetriervorrichtung eine Stromquelle auf. Die Stromquelle erlaubt einen Austausch von Ladungen mit dem Speichermodul in beide Richtungen. Im Gegensatz zum Widerstand kann dem Speichermodul damit nicht nur Ladung entnommen, sondern es kann die Ladung des Speichermoduls auch erhöht werden. Die Stromquelle stellt damit ein Stellglied zum Austausch von Ladung mit dem Speichermodul dar. Im Gegensatz zum Widerstand, bei dem sich ein Strom in Abhängigkeit von der Spannung am Speichermodul und den Widerstandswert einstellt, kann die Stromquelle nahezu beliebige Ströme erzeugen. Insbesondere kann ein Strom unabhängig von der Spannung des Speichermoduls erzeugt werden. Falls jedem Speichermodul eine Stromquelle zum Symmetrieren parallel angeordnet ist und die Stromquellen untereinander verbunden sind, kann mit der entstehenden Anordnung ein Ladungsaustausch zwischen den einzelnen Speichermodulen vorgenommen werden. Bei einer ausgeglichenen Bilanz zwischen aufzunehmender und abzugebender Ladung der einzelnen Speichermodule kann auf die Zufuhr von Energie verzichtet werden. Auf diese Weise lässt sich ein nahezu verlustfreies Symmetrieren des Energieversorgungssystems realisieren.

Bei einer weiteren vorteilhaften Ausgestaltungsform umfasst die Reihenschaltung von Speichermodulen mindestens ein weiteres Speichermodul. Es hat sich gezeigt, dass das Verfahren zum Symmetrieren auch dann anwendbar ist, wenn in der Reihenschaltung der kapazitiven Speichermodule sich mindestens ein weiteres Speichermodul befindet. Dabei kann es sich bei dem weiteren Speichermodul beispielsweise um Batterien, rotierende Speicher oder sonstige beliebige Energiespeicher handeln. Auch ein weiteres, kapazitives Speichermodul kann als weiteres Speichermodul in der Reihenschaltung angeordnet werden. Es unterscheidet sich beispielsweise von den übrigen kapazitiven Speichermodulen dadurch, dass dieses nicht unbedingt mit der Symmetriervorrichtung verbunden sein muss. Auch in dieser Anordnung kann das Symmetrieren der kapazitiven Speichermodule zuverlässig durchgeführt werden.

Bei einer weiteren vorteilhaften Ausgestaltungsform weist mindestens ein kapazitives Speichermodul eine Reihenschaltung und/oder Parallelschaltung von Speicherzellen auf. Um beispielsweise die zu speichernde Energiemenge zu erhöhen, oder um beispielsweise die maximale Spannung oder den maximalen Strom eines Speichermoduls weiter zu erhöhen, hat es sich als vorteilhaft erwiesen, mehrere Speicherzellen zu einem Speichermodul zu integrieren. Bei den Speicherzellen handelt es sich um Energiespeicher, die ein kapazitives Verhalten aufweisen. Insbesondere haben sich dafür Kondensatoren bewährt. Damit sind Speichermodule herstellbar, die sich insbesondere in Bezug auf Baugröße, Bauform, speicherbare Energiemenge, Austauschbarkeit, Wartbarkeit usw. für den Einsatz in Energiespeichersystemen eignen. Damit ist der Aufbau der Speichermodule entkoppelt von der technologischen Entwicklung oder Weiterentwicklung, da die einzelnen Speicherzellen nicht unbedingt immer leistungsfähiger werden müssen, um höherwertige Speichermodule fertigen zu können. Auch mit der Integration mehrerer oder einer Vielzahl von Speicherzellen zu einem Speichermodul lässt sich ein entsprechendes leistungsfähiges Speichermodul herstellen. Dadurch sind die Speichermodule einfach skalierbar und können auf das entsprechende Anwendungsgebiet angepasst und dimensioniert werden.

Bei einer weiteren vorteilhaften Ausgestaltungsform weist das Energiespeichersystem mindestens eine Baueinheit auf, wobei die Baueinheit mindestens ein kapazitives Speichermodul und zumindest Teile der Symmetriervorrichtung aufweist. Bei der Energiespeicheranordnung können mehrere Speichermodule zu einer Baueinheit zusammengefasst werden. In diese Baueinheit können auch die Teile der Symmetriervorrichtung integriert werden, die der Symmetrierung der Speichermodule dieser Baueinheit dienen. Damit können in Bezug auf Handhabbarkeit, insbesondere in Hinblick auf Abmessungen und Gewicht Einheiten geschaffen werden, die einfach zu tauschen sind. Als besonders vorteilhaft hat es sich erwiesen, das Energiespeichersystem aus mehreren gleichen Baueinheiten aufzubauen.

Im Folgenden wird die Erfindung anhand der in den Figuren dargestellten Ausführungsbeispiele näher beschrieben und erläutert. Es zeigen:

FIG 1          ein erstes Ausführungsbeispiel eines Energiespeichersystems,

FIG 2          ein Blockschaltbild für die Durchführung des Verfahrens,

FIG 3          ein weiteres Blockschaltbild zur Durchführung des Verfahrens,

FIG 4, FIG 5   Diagramme zum elektrischen Verhalten der Speichermodule,

FIG 6 bis FIG 8   Zusammenhänge zwischen Spannungen und Ladungen der Speichermodule für verschiedene Ausführungsbeispiele,

FIG 9          ein Ausführungsbeispiel eines Speichermoduls und Teilen einer Symmetriervorrichtung,

FIG 10         eine weiteres Ausführungsbeispiel eines Speichermoduls und Teilen einer Symmetriervorrichtung und

FIG 11         eine Energiespeicheranordnung.

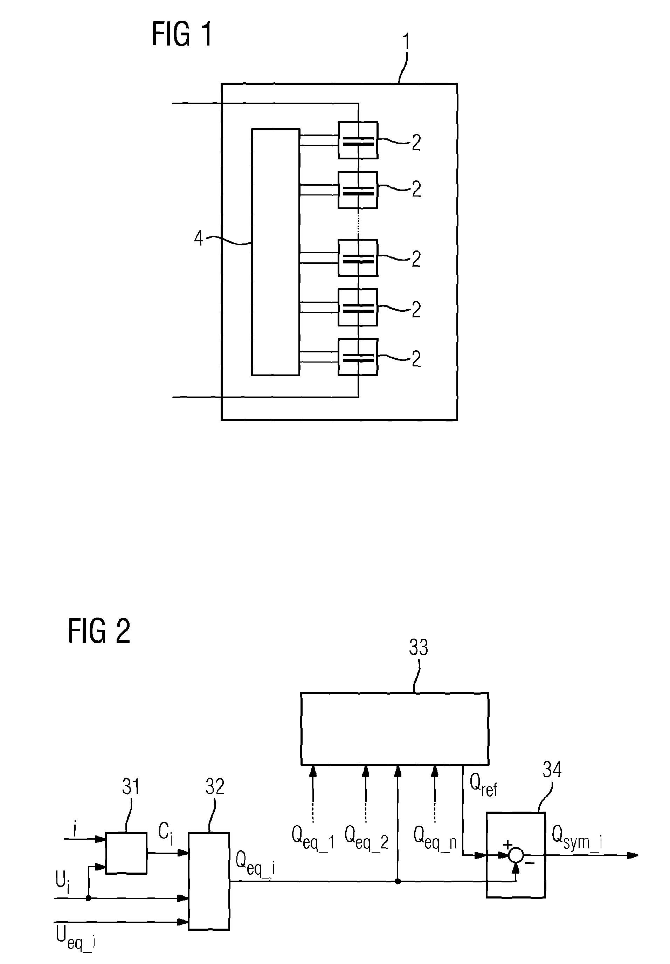

FIG 1 zeigt ein Energiespeichersystem 1, welches kapazitive Speichermodule 2 und eine Symmetriervorrichtung 4 umfasst. Die kapazitiven Speichermodule 2 sind in einer Reihenschaltung angeordnet. Jedes dieser kapazitiven Speichermodule ist mit der Symmetriervorrichtung 4 verbunden. Die beiden Enden der Reihenschaltung sind als Anschlüsse des Energiespeichersystems 1 nach außen geführt.

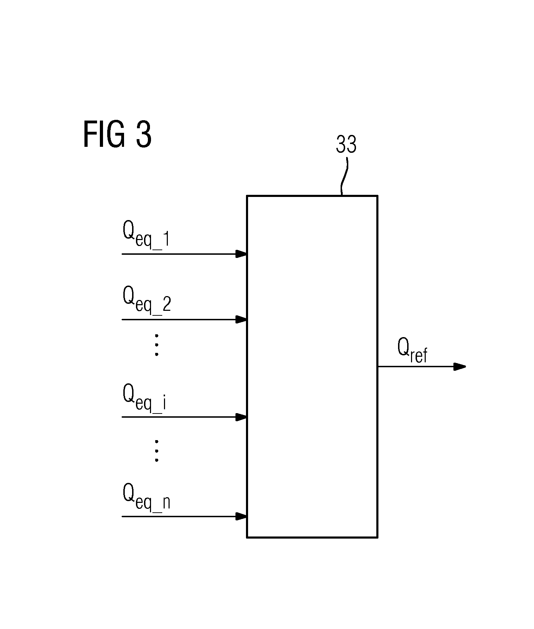

FIG 2 zeigt ein Blockschaltbild zur Bestimmung der Symmetrierladung $Q_{sym\_i}$. Das Blockschaltbild weist Mittel 31 zur Bestimmung der Kapazität $C_i$, Mittel 32 zur Bestimmung der Modulladung $Q_{eq\_i}$, Mittel 33 zur Bestimmung der Referenzladung $Q_{ref}$ sowie Mittel 34 zur Bestimmung der Symmetrierladung $Q_{sym\_i}$ auf. Die Rechenschritte der Mittel 31, 32, 34 zur Bestimmung der Kapazität $C_i$, der Modulladung $Q_{eq\_i}$ und der Symmetrierladung $Q_{sym\_i}$ werden jeweils für die einzelnen kapazitiven Speichermodule 2 durchgeführt. Der Index i gibt an, dass die entsprechende Berechnung das i-te kapazitive Speichermodul 2 der mindestens zwei kapazitiven Speichermodule 2 betrifft. Das Mittel 33 zur Bestimmung der Referenzladung $Q_{ref}$ benötigt zur Bestimmung der Referenzladung $Q_{ref}$ die Modulladungen $Q_{eq\_i}$ der einzelnen Speichermodule. An dieser Stelle wird auf FIG 3 und die entsprechende Berechnung der Referenzladung $Q_{ref}$ verwiesen. Die Modulladung $Q_{eq\_i}$ wird mit Hilfe des Mittels 32 zur Bestimmung der Modulladung $Q_{eq\_i}$ bestimmt. Als Eingangsgrößen dafür dienen die Kapazität $C_i$ des jeweiligen kapazitiven Speichermoduls 2, die Spannung $U_i$ des kapazitiven Speichermoduls 2 sowie die Symmetrierspannung $U_{eq\_i}$ des jeweiligen kapazitiven Speichermoduls 2. Die Kapazität $C_i$ kann dabei beispielsweise von einer Zustandsüberwachung des Energiespeichersystems übernommen werden, die den Alterungszustand der einzelnen kapazitiven Speichermodule 2 überwacht. In dem in FIG 2 dargestellten Ausführungsbeispiel wird die Kapazität $C_i$ des jeweiligen Speichermoduls 2 durch ein Mittel 31 zur Bestimmung der Kapazität $C_i$ bestimmt. Als Eingangsgrößen sind hier die Spannung $U_i$ des kapazitiven Speichermoduls 2 sowie der Strom i durch die Reihenschaltung der Speichermodule 2 angegeben. Alternativ kann auf den Strom i durch die Reihenschaltung der kapazitiven Speichermodule 2 verzichtet werden, wenn die Bestimmung der Kapazität $C_i$ über den Spannungsverlauf der Spannung $U_i$ beim Entladen des kapazitiven Speichermoduls 2 über einen Widerstand mit bekanntem Widerstandswert erfolgt.

Die Modulladung $Q_{eq\_i}$ wird im Anschluss dem Mittel 34 zur Bestimmung der Symmetrierladung $Q_{sym\_i}$ zugeführt. Als weitere Eingangsgröße des Mittels 34 zur Bestimmung der Symmetrierladung $Q_{sym\_i}$ ist die Referenzladung $Q_{ref}$ erforderlich. Die Bestimmung der Referenzladung $Q_{ref}$ erfolgt auf Basis der einzelnen Modulladungen $Q_{eq\_i}$, wie in FIG 3 dargestellt. In dem dargestellten Ausführungsbeispiel erfolgt die Bestimmung der Symmetrierladung $Q_{sym\_i}$ durch die Differenzbildung aus der Referenzladung $Q_{ref}$ und der Modulladung $Q_{eq\_i}$ des jeweiligen kapazitiven Speichermoduls 2. Als Ergebnis ergibt sich die Symmetrierladung $Q_{sym\_i}$.

FIG 3 zeigt die Bestimmung der Referenzladung $Q_{ref}$ in Abhängigkeit von den einzelnen Modulladungen $Q_{eq\_i}$. Als Eingangsgröße dienen die Modulladungen $Q_{eq\_i}$ der in Reihe angeordneten kapazitiven Speichermodule 2. Im Allgemeinen wird in diesem Ausführungsbeispiel die Anzahl der in Reihe geschalteten kapazitiven Speichermodule 2 mit n bezeichnet. Daraus wird ersichtlich, dass in diesem Ausführungsbeispiel für die Berechnung der Referenzladung $Q_{ref}$ die Modulladung aller in Reihe angeordneten, kapazitiven Speichermodule 2 verwendet wird. Die Referenzladung $Q_{ref}$ kann dabei in Abhängigkeit von den Eingangsgrößen der Modulladungen $Q_{eq\_i}$ bestimmt werden. Als besonders vorteilhaft hat es sich erwiesen, wenn die Referenzladung $Q_{ref}$ durch den Maximalwert der Modulladung $Q_{eq\_i}$ bestimmt wird. Daneben hat es sich alternativ als günstig erwiesen, wenn für die Ermittlung der Referenzladung $Q_{ref}$ der Mittelwert der einzelnen Modulladungen $Q_{eq\_i}$ verwendet wird.

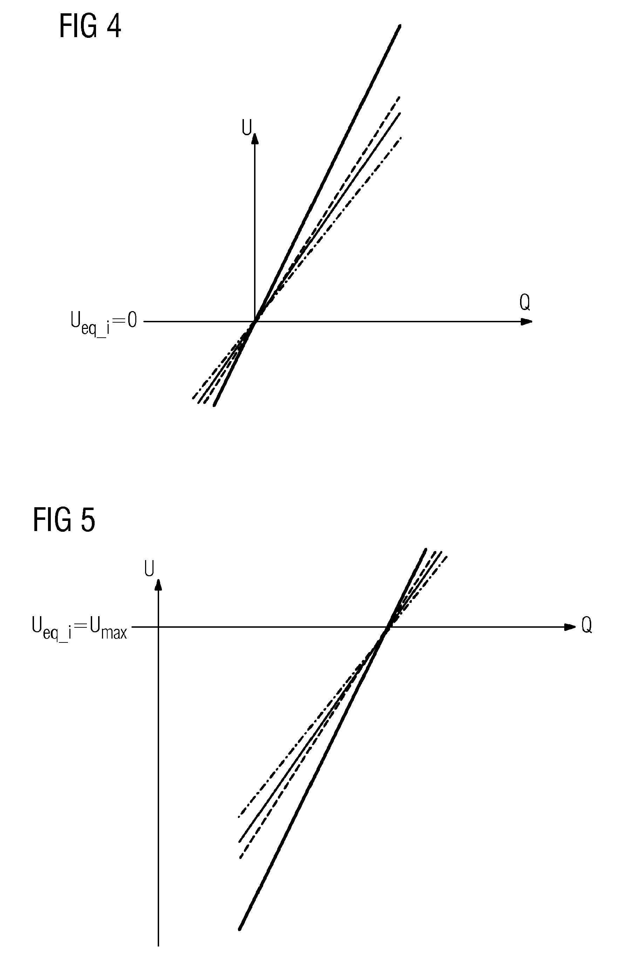

FIG 4 zeigt das Verhalten der Spannung $U_i$ verschiedener kapazitiver Speichermodule 2 beim Hinzufügen von Ladungen $Q_i$. Abhängig von der Kapazität $C_i$ des einzelnen kapazitiven Speichermoduls 2 steigt die Spannung $U_i$ beim Einbringen der Ladung $Q_i$ an. Je kleiner die Kapazität $C_i$ ist, desto stärker steigt die Spannung $U_i$ beim Einbinden einer entsprechenden Ladung $Q_i$. Die Ladung $Q_i$ ergibt sich aus dem Strom i durch das Speichermodul. Ein entsprechender Strom erhöht kontinuierlich die Ladung $Q_i$ des Speichermoduls. Die Ladung $Q_i$ bestimmt sich aus dem Integral des Stromes i über der Zeit. Bei dem in FIG 4 dargestellten Ausführungsbeispiel handelt es sich um ein Energiespeichersystem, welches im Betriebszustand $U_i = 0$ symmetriert ist. Die Symmetrierspannung $U_{eq\_i}$ beträgt in diesem Ausführungsbeispiel 0V. Es ist zu erkennen, dass ohne Eingriff einer Symmetriervorrichtung mit steigender eingebrachter Ladung $Q_i$, das heißt beim Fließen eines Stromes i, die Spannungen $U_i$ aufgrund unterschiedlicher Kapazitäten $C_i$ der einzelnen kapazitiven Speichermodule 2 auseinanderlaufen.

FIG 5 zeigt ein entsprechendes Energiespeichersystem 1 bei dem im Unterschied zur FIG 4 die Symmetrierspannung $U_{eq\_i}$ der Maximalspannung $U_{max}$ entspricht. Zur Vermeidung von Wiederholungen bezüglich übereinstimmender Bestandteile des Diagramms wird auf die Beschreibungen zu der FIG 4 sowie die dort eingeführten Bezugzeichen verwiesen.

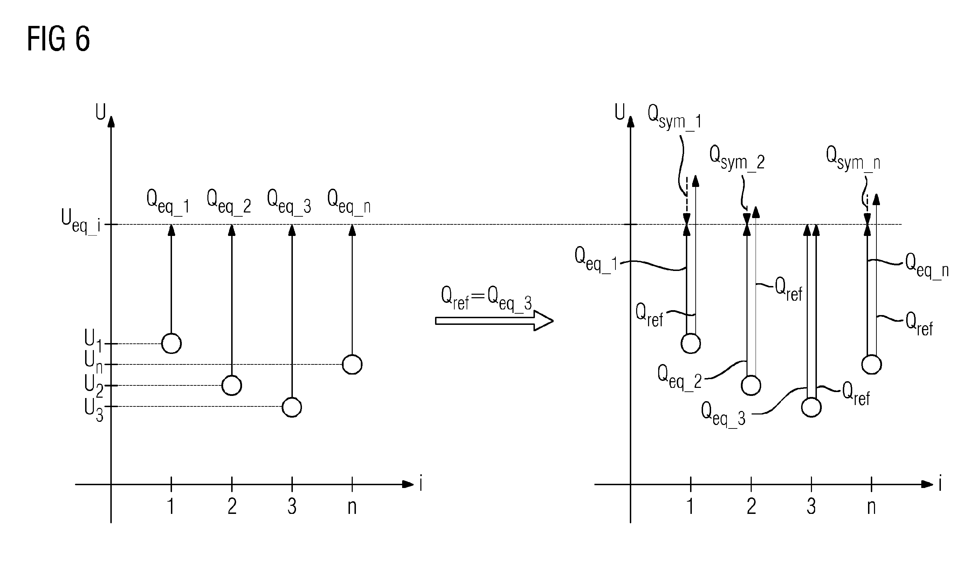

FIG 6 zeigt den Zusammenhang zwischen Ladungen und Spannungen der einzelnen kapazitiven Speichermodule 2 für das Verfahren zum Symmetrieren. Auf der horizontalen Achse sind dabei die einzelnen kapazitiven Speichermodule 2 angegeben. Auf der vertikalen Achse sind die Spannungen $U_i$ der einzelnen kapazitiven Speichermodule 2 angegeben. Dabei sind die Spannungen $U_i$ der einzelnen kapazitiven Speichermodule 2 sowie die entsprechende Symmetrierspannung $U_{eq\_i}$ angegeben. Für den Fall, dass die Kapazität $C_i$ der einzelnen kapazitiven Speichermodule 2 gleich groß ist, stellt die Länge der Pfeile ein Maß für die entsprechende Ladung dar. Im Allgemeinen unterscheidet sich jedoch die Kapazität $C_i$ der einzelnen kapazitiven Speichermodule 2, so dass die Länge der Pfeile dann kein Maß für die entsprechende Modulladung $Q_{eq\_i}$ ist. Je größer die Kapazität $C_i$ eines kapazitiven Speichermoduls 2 ist, desto mehr Ladung ist erforderlich, um die entsprechende Spannung des Speichermoduls zu verändern.

In diesem Ausführungsbeispiel soll die Symmetrierung mit der Symmetrierspannung $U_{eq\_i}$ für die einzelnen kapazitiven Speichermodule 2 erfolgen. Zur Erläuterung des Prinzips ist, wie aus dem Diagramm ersichtlich ist, die Symmetrierspannung $U_{eq\_i}$ für alle kapazitiven Speichermodule 2 gleich vorgegeben. Im Allgemeinen kann die Symmetrierspannung $U_{eq\_i}$ der einzelnen Speichermodule 2 unabhängig voneinander vorgegeben werden. Die einzelnen kapazitiven Speichermodule 2 weisen in dem vorliegenden Betriebszustand unterschiedliche Spannungen $U_i$ auf. In einem ersten Schritt müssen die Ladungen $Q_{eq\_i}$ ermittelt werden, die erforderlich sind, um die einzelnen kapazitiven Speichermodule 2 auf die Spannung $U_{eq\_i}$ zu bringen.

Aus den einzelnen Modulladungen $Q_{eq\_i}$ wird die Referenzspannung $Q_{ref}$ bestimmt. In diesem Ausführungsbeispiel erfolgt die Bestimmung der Referenzladung $U_{ref}$ aus dem Maximalwert der einzelnen Modulladungen $Q_{eq\_i}$. Damit stellt in diesem Beispiel die Modulladung $Q_{eq\_3}$ die Referenzladung $Q_{ref}$ dar. Die Referenzladung $Q_{ref}$ beeinflusst die Spannung $U_i$ der einzelnen kapazitiven Speichermodule 2 beim Laden/Entladen des Energiespeichersystems 1 durch den Strom i der Reihenschaltung. Die sich dann ergebenden ungleichen Spannungen müssen durch die Symmetrierladungen $Q_{sym\_i}$ ausgeglichen werden. In dem Diagramm ist es dadurch dargestellt, dass die Auswirkung der Referenzladung $Q_{ref}$ durch die Symmetrierladung $Q_{sym\_i}$ derart beeinflusst wird, dass die Spannung der einzelnen kapazitiven Speichermodule 2 die Symmetrierspannung $U_{eq\_i}$ annehmen. Dieses Ausführungsbeispiel ist im besonderen für eine Symmetriervorrichtung 4 geeignet, die mit Hilfe von einem oder mehreren Widerständen Ladung aus den einzelnen kapazitiven Speichermodulen 2 entnehmen kann. Durch die Auswahl der Referenzladung $Q_{ref}$ als Maximum der einzelnen Modulladungen $Q_{eq\_i}$ ergeben sich nur Symmetrierladungen $Q_{sym\_i}$ die in der FIG 6 nach unten gerichtet sind. Die nach unten gerichteten Symmetrierladungen stellen dabei Ladungen dar, die den kapazitiven Speichermodulen 2 zu entnehmen sind. Dies kann auf einfache Weise mit Hilfe eines Widerstandes geschehen. Zuführen von Ladungen zu einem kapazitiven Speichermodul 2 ist in diesem Ausführungsbeispiel nicht erforderlich. Ersichtlich ist es daraus, dass es keine Symmetrierladung $Q_{sym\_i}$ existiert, die in der FIG 6 einen nach oben gerichteten Pfeil darstellt.

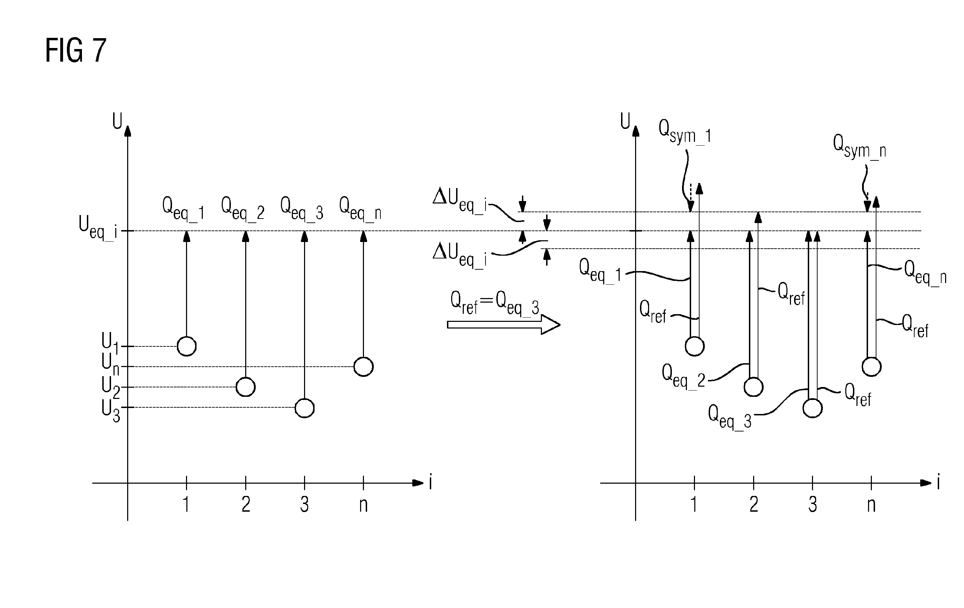

FIG 7 zeigt ein weiteres Ausführungsbeispiel für das Verfahren zum Symmetrieren. Bei diesem Beispiel ist neben der Symmetrierladung $U_{eq\_i}$ ein Toleranzband $\Delta U_{Eq\_i}$ für die Symmetrierspannung angegeben. Zur Vermeidung von Wiederholungen bezüglich übereinstimmender Bestandteile des Diagramms wird auf die Beschreibungen zu der FIG 6 sowie die dort eingeführten Bezugszeichen verwiesen. Aus der Vorgabe des Toleranzbandes $\Delta U_{eq\_i}$ können die einzelnen Symmetrierladungen $Q_{sym\_i}$ betraglich kleiner ausfallen. Damit werden die elektrischen Verluste, die durch den Stromfluss beim Symmetrieren, insbesondere durch den Widerstand, entstehen, verringert. Im Falle des zweiten kapazitiven Speichermoduls 2 braucht die Symmetriervorrichtung 4 nicht aktiv zu werden, da durch die Referenzladung $Q_{ref}$ die Spannung des zweiten kapazitiven Speichermoduls 2 bereits innerhalb des Toleranzbandes $\Delta U_{eq\_i}$ für die Symmetrierspannung $U_{eq\_i}$ liegt. Auch dieses Ausführungsbeispiel eignet sich im Besonderen für das Symmetrieren mittels einem oder mehrerer Widerstände.

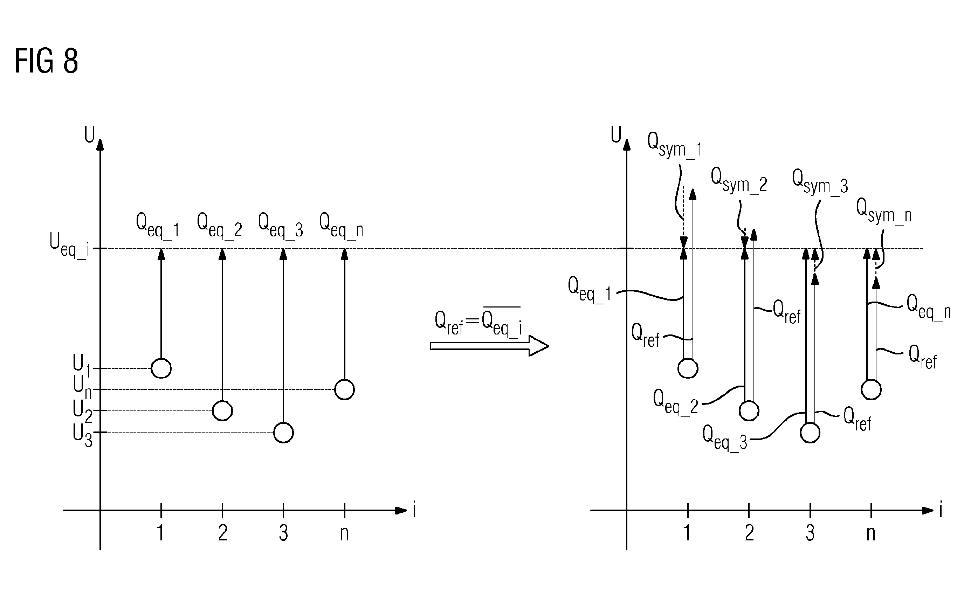

FIG 8 zeigt ein weiteres Diagramm zum elektrischen Verhalten von Speichermodulen. Dabei ergibt sich die Referenzladung $Q_{ref}$ als Mittelwert der einzelnen Modulladungen $Q_{eq\_i}$. Daraus ergeben sich sowohl Symmetrierladungen $Q_{sym\_i}$ bei denen dem kapazitiven Speichermodul 2 Ladung entnommen werden muss als auch Symmetrierladungen $Q_{sym\_i}$ bei denen dem kapazitiven Speichermodul Ladung hinzugefügt werden muss. Die zu entnehmenden Symmetrierladungen $Q_{sym\_i}$ sind im Diagramm dadurch zu erkennen, dass die entsprechende Symmetrierladung $Q_{sym\_i}$ durch einen nach unten gerichteten Pfeil dargestellt ist. Dies ist bei den kapazitiven Speichermodulen mit der Nummer 1 und der Nummer 2 der Fall. Bei den kapazitiven Speichermodulen mit der Nummer 3 und der Nummer n zeigt der nach oben gerichtete Pfeil der Symmetrierladung $Q_{sym\_i}$, dass diesen entsprechenden kapazitiven Speichermodulen 2 Ladung hinzuzufügen ist. Zur Vermeidung von Wiederholungen bezüglich übereinstimmender Bestandteile des Diagramms wird wiederum auf die Beschreibungen zu den Figuren 6 und 7 sowie die dort eingeführten Bezugszeichen verwiesen. Das in FIG 8 dargestellte Beispiel eignet sich im Besonderen für einen Aufbau mit Stromquellen zur Symmetrierung der einzelnen kapazitiven Speichermodule 2. Dabei hat es sich als besonders vorteilhaft erwiesen, die Stromquelle als bidirektionale Stromquelle auszuführen. Dies liegt darin begründet, dass den einzelnen kapazitiven Speichermodulen 2 nicht nur Ladung entnommen sondern einzelnen kapazitiven Speichermodulen 2 sondern auch Ladung hinzugefügt werden muss.

Dafür ist eine entsprechende Energiequelle notwendig. Als besonders vorteilhaft hat es sich erwiesen, das hier dargestellte Verfahren dann anzuwenden, wenn eine Möglichkeit der Umladung einzelner kapazitiver Speichermodule 2 besteht. Bei dieser Umladung wird Ladung einzelner kapazitiver Speichermodule 2, die zu entladen sind, anderen kapazitiven Speichermodulen 2 zugeführt, denen eine entsprechende Symmetrierladung $Q_{sym\_i}$ hinzuzufügen ist. Für den Fall, dass abzugebende und aufzunehmende Ladung der kapazitiven Speichermodulen 2 in Summe gleich groß sind, muss der Symmetriervorrichtung 4 von außen keine Energie zugeführt werden. Die entsprechende Versorgung mit Ladung kann durch Umladung zwischen den einzelnen kapazitiven Speichermodulen 2 erfolgen. Damit entstehen keine oder zumindest nur geringe elektrische Verluste bei der Symmetrierung.

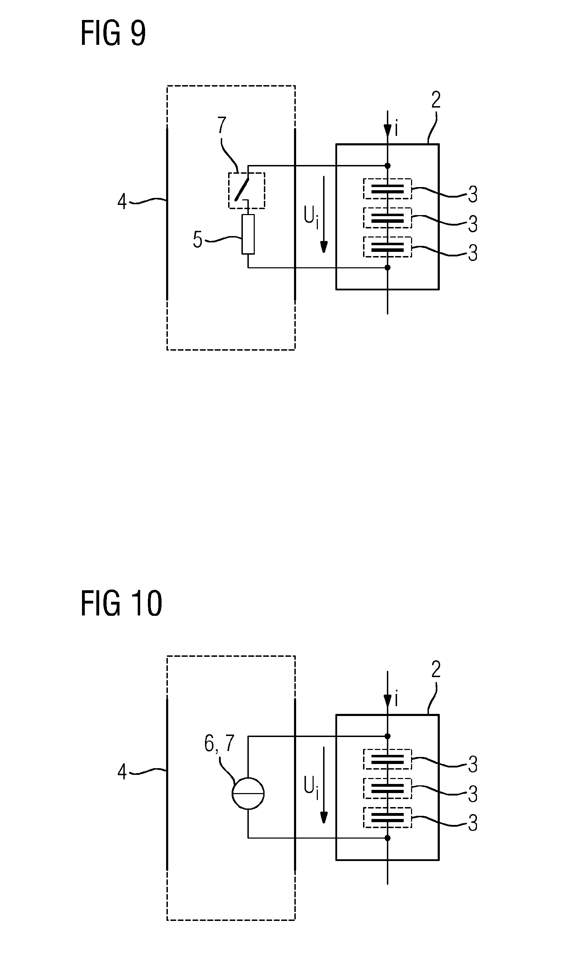

FIG 9 zeigt ein Ausführungsbeispiel eines kapazitiven Speichermoduls 2 und Teile einer Symmetriervorrichtung 4. Das kapazitive Speichermodul 2 weist dabei eine Reihenschaltung von Speicherzellen 3 auf. Bei den Speicherzellen 3 handelt es sich beispielsweise um Kondensatoren. An den Klemmen des kapazitiven Speichermoduls liegt die Spannung $U_i$ an. Der Strom i durchfließt die Reihenschaltung und damit auch das in FIG 9 dargestellte kapazitive Speichermodul 2. In dem dargestellten Ausführungsbeispiel ist das kapazitive Speichermodul 2 mit einem Widerstand 5 und einem Stellglied 7 der Symmetriervorrichtung 4 verbunden. Das Stellglied 7 stellt dabei einen Schalter dar. Es hat sich als vorteilhaft erwiesen, für jedes kapazitive Speichermodul 2 einen entsprechende Widerstand 5 und ein Stellglied 7 vorzusehen. Über das Stellglied 7, dem Schalter, kann mittels des Widerstandes 5 dem kapazitiven Speichermodul 2 Ladung entnommen werden. Das Stellglied 7 wird dabei von einer entsprechenden Regelung/Steuerung angesteuert, die in diesem Ausführungsbeispiel nicht dargestellt ist.

FIG 10 zeigt ein weiteres Ausführungsbeispiel eines Speichermoduls und Teilen einer Symmetriervorrichtung 4. Zur Vermeidung von Wiederholungen wird auf die Beschreibung zur FIG 9 und die dort eingeführten Bezugszeichen verwiesen. Die Symmetriervorrichtung 4 weist in diesem Beispiel eine Stromquelle 6 auf, die gleichzeitig als Stellglied 7 dient. Diese Stromquelle ist elektrisch mit dem kapazitiven Speichermodul 2 verbunden. Im Gegensatz zur Anordnung mit Widerstand kann bei diesem Aufbau dem kapazitiven Speichermoduls 2 nicht nur Ladung entnommen, sondern auch Ladung hinzugefügt werden. Darüber hinaus kann der Strom zwischen kapazitivem Speichermodul 2 und Stromquelle 6 unabhängig von der Spannung $U_i$ des kapazitiven Speichermoduls 2 vorgegeben werden. Es hat sich als vorteilhaft erwiesen, jedes kapazitive Speichermodul 2 jeweils mit einer Stromquelle 6 zu verbinden. Wenn darüber hinaus ein Ladungsaustausch zwischen den Stromquellen 6 möglich ist, kann hiermit ein Austausch der Ladungen zwischen einzelnen kapazitiven Speichermodulen 2 erfolgen. Dies stellt eine Realisierungsmöglichkeit einer Umladeschaltung dar. Damit können elektrische Verluste im Energiespeichersystem 1 reduziert werden.

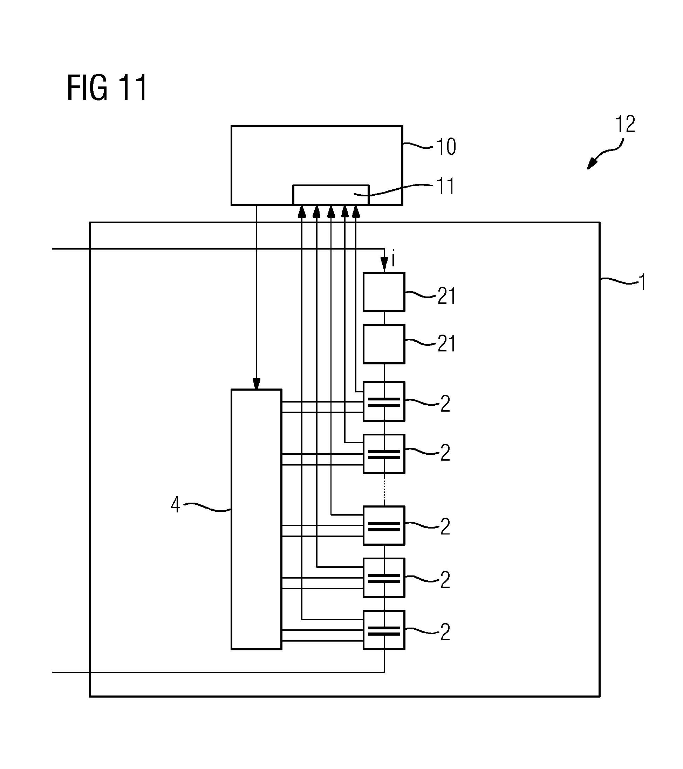

FIG 11 zeigt eine Energiespeicheranordnung 12. Diese umfasst ein Energiespeichersystem 1 und eine Steuervorrichtung 10. Das Energiespeichersystem 1 weist wiederum eine Reihenschaltung von kapazitiven Speichermodulen 2 auf. Diese Reihenschaltung weist darüber hinaus weitere Speichermodule 21 auf. Bei diesen weiteren Speichermodulen 21 kann es sich ebenfalls um kapazitive weitere Speichermodule 21 oder auch um Batterien, Schwungmassenspeicher oder sonstige elektrische oder chemische Energiespeicher handeln. Prinzipiell können als weiteres Speichermodul 21 sämtliche Energiespeicher verwendet werden. Die kapazitiven Speichermodule 2 sind jeweils mit der Symmetriervorrichtung 4 elektrisch verbunden. Die Steuerung des Ladungsaustausches zwischen kapazitiven Speichermodul 2 und Symmetriervorrichtung 4 wird durch die Steuervorrichtung 10 gesteuert. Dafür werden von den kapazitiven Speichermodulen 2 Zustandsgrößen dem Eingang 11 der Steuervorrichtung 12 übermittelt. Aus diesen Informationen werden Steuerbefehle für mindestens ein Stellglied 7 der Symmetriervorrichtung 4 ermittelt. Bei dem Stellglied 7 kann es sich um einen Schalter, der einen Stromfluss durch einen Widerstand 7 ermöglicht, oder um eine Stromquelle 6 handeln. Dabei kann die Steuervorrichtung 10 sowohl innerhalb des Energiespeichersystems 1 oder wie dargestellt außerhalb des Energiespeichersystems 1 angeordnet sein. Als besonders vorteilhaft hat es sich erwiesen, dem Eingang 11 der Steuervorrichtung 10 als Zustandsgröße die Spannung $U_i$ der kapazitiven Speichermodule zu übermitteln. Damit ist die Durchführung des beschriebenen Verfahrens zur Symmetrierung zuverlässig möglich. Zusätzlich hat es sich weiterhin als sinnvoll erwiesen, den Strom i durch die Reihenschaltung der Speichermodule 2, 21 der Steuervorrichtung 10 zur Verfügung zu stellen. Dazu ist ein entsprechender Messwert des Stromes i dem Eingang 11 der Steuervorrichtung 10 zuzuführen. Dieser kann zur Überwachung der Funktionsfähigkeit des Energiespeichersystems oder auch zur Bestimmung der Kapazität $C_i$ der einzelnen kapazitiven Speichermodule genutzt werden.

Obwohl die Erfindung im Detail durch die bevorzugten Ausführungsbespiele näher illustriert und beschrieben wurde, ist die Erfindung nicht alleine auf die offenbarten Beispiele beschränkt und andere Variationen können vom Fachmann hieraus abgeleitet werden, ohne den Schutzumfang der Erfindung zu verlassen.

**Patentansprüche**

1. Verfahren zum Symmetrieren eines Energiespeichersystems (1), wobei das Energiespeichersystem (1) eine Reihenschaltung von Speichermodulen (2,21) umfasst, wobei die Reihenschaltung von Speichermodulen (2,21) mindestens zwei kapazitive Speichermodule (2) aufweist, wobei die kapazitiven Speichermodule (2) mit einer Symmetriervorrichtung (4) derart verbunden sind, dass mittels eines Stromflusses zwischen der Symmetriervorrichtung (4) und den kapazitiven Speichermodulen (2) jeweils eine Ladung der kapazitiven Speichermodule (2) beeinflussbar ist, wobei die kapazitiven Speichermodule (2) jeweils eine Kapazität ($C_i$) aufweisen, wobei das Verfahren die folgenden Schritte umfasst:

   - Ermittlung jeweils der Kapazität ($C_i$) der kapazitiven Speichermodule (2),
   - Bestimmung jeweils einer Modulladung ($Q_{eq\_i}$) für die kapazitiven Speichermodule (2) zumindest aus einer Spannung ($U_i$) des jeweiligen kapazitiven Speichermoduls (2) und einer vorgebbaren Symmetrierspannung ($U_{eq\_i}$),
   - Bestimmung einer Referenzladung ($Q_{ref}$) zumindest aus den Modulladungen ($Q_{eq\_i}$) der kapazitiven Speichermodule (2),
   - Bestimmung jeweils einer Symmetrierladung ($Q_{sym\_i}$) für die kapazitiven Speichermodule (2) zumindest aus der Referenzladung ($Q_{ref}$) und der Modulladung ($Q_{eq\_i}$) des jeweiligen kapazitiven Speichermoduls (2) und
   - Beeinflussung jeweils der Ladung der kapazitiven Speichermodule (2) durch Austausch der jeweiligen Symmetrierladung ($Q_{sym\_i}$) zwischen dem jeweiligen kapazitiven Speichermodul (2) und der Symmetriervorrichtung (4).

2. Verfahren nach Anspruch 1, wobei die Symmetrierspannungen ($U_{eq\_i}$) der einzelnen kapazitiven Speichermodule (2) unabhängig voneinander vorgebbar sind.

3. Verfahren nach einem der Ansprüche 1 oder 2, wobei die Referenzladung ($Q_{ref}$) durch den Maximalwert der Modulladungen ($Q_{eq\_i}$) gebildet wird.

4. Verfahren nach einem der Ansprüche 1 oder 2, wobei die Referenzladung ($Q_{ref}$) durch den Mittelwert der Modulladungen ($Q_{eq\_i}$) gebildet wird.

5. Verfahren nach einem der Ansprüche 1 bis 4, wobei jeweils die Kapazität ($C_i$) der einzelnen kapazitiven Speichermodule (2) aus der Änderung der Spannung ($U_i$) des jeweiligen kapazitiven Speichermoduls (2) und des Stromes (i) durch die Reihenschaltung der kapazitiven Speichermodule (2) bestimmt wird.

6. Verfahren nach einem der Ansprüche 1 bis 5, wobei die einzelnen kapazitiven Speichermodule (2) jeweils mit einem Widerstand (5) verknüpft sind, wobei die Kapazität ($C_i$) der einzelnen kapazitiven Spei-

chermodule (2) aus der Spannung ($U_i$) des jeweiligen kapazitiven Speichermoduls (2) oder aus einem Strom (i) durch den Widerstand (5) bestimmt wird.

7. Verfahren nach einem der Ansprüche 1 bis 6, wobei die Bestimmung der Symmetrierladung ($Q_{sym\_i}$) für die kapazitiven Speichermodule (2) aus der Differenz zwischen der Referenzladung ($Q_{ref}$) und der Modulladung ($Q_{eq\_i}$) des jeweiligen kapazitiven Speichermoduls (2) erfolgt.

8. Verfahren nach einem der Ansprüche 1 bis 7, wobei die Symmetrierladung ($Q_{sym\_i}$) für die kapazitiven Speichermodule (2) in Abhängigkeit von einem vorgebbaren Toleranzband ($\Delta U_{eq\_i}$) der Symmetrierspannung ($U_{eq\_i}$) bestimmt wird.

9. Verfahren nach einem der Ansprüche 1 bis 8, wobei mittels der Symmetriervorrichtungen (4) Ladungen zwischen den kapazitiven Speichermodulen (2) ausgetauscht werden.

10. Verfahren nach einem der Ansprüche 1 bis 9, wobei die Vorgabe der Symmetrierspannung ($U_{eq\_i}$) der einzelnen kapazitiven Speichermodule (2) in Abhängigkeit von einem vergebbaren Wartungsintervall und/oder von der Kapazität ($C_i$) der jeweiligen kapazitiven Speichermodule (2) erfolgt.

11. Steuervorrichtung (10) zur Durchführung des Verfahrens nach einem der Ansprüche 1 bis 10, wobei die Steuervorrichtung (10) einen Eingang (11) zur Erfassung mindestens einer Spannung $U_i$ der Anzahl der Speichermodule (2) aufweist und wobei die Steuervorrichtung mit einem Stellglied (7) verknüpft ist, mit dem ein Ladungsaustausch zwischen Speichermodul (2) und Symmetriervorrichtung (4) steuerbar ist.

12. Energiespeicheranordnung (12) aufweisend

   - eine Reihenschaltung von Speichermodulen (2,21), wobei die Reihenschaltung von Speichermodulen (2,21) mindestens zwei kapazitive Speichermodule (2) aufweist, wobei die kapazitiven Speichermodule (2) jeweils mit einer Symmetriervorrichtung (4) derart verbunden sind, dass mittels eines Stromflusses zwischen der Symmetriervorrichtung (4) und dem jeweiligen kapazitiven Speichermodul (2) eine Ladung ($Q_i$) des kapazitiven Speichermoduls (2) beeinflussbar ist,
   - eine Steuervorrichtung (10) nach Anspruch 11.

13. Energiespeicheranordnung (12) nach Anspruch 12, wobei die Symmetriervorrichtung (4) einen Widerstand (5) aufweist.

14. Energiespeicheranordnung (12) nach einem der Ansprüche 12 oder 13, wobei die Symmetriervorrichtung (4) eine Stromquelle (6) aufweist.

15. Energiespeicheranordnung (12) nach einem der Ansprüche 12 bis 14, wobei die Reihenschaltung von Speichermodulen (2,21) mindestens ein weiteres Speichermodul (21) umfasst.

16. Energiespeicheranordnung (12) nach einem der Ansprüche 12 bis 15, wobei mindestens ein kapazitives Speichermodul (2) eine Reihenschaltung und/oder Parallelschaltung von Speicherzellen (3) aufweist.

17. Energiespeicheranordnung (12) nach einem der Ansprüche 12 bis 16, wobei die Energiespeicheranordnung (12) mindestens eine Baueinheit aufweist, wobei die Baueinheit mindestens ein kapazitives Speichermodul (2) und zumindest Teile der Symmetriervorrichtung (4) aufweist.

18. Fahrzeug, insbesondere ein Bus oder ein Schienenfahrzeug, mit einer Energiespeicheranordnung (12) nach einem der Ansprüche 12 bis 17.

## FIG 1

## FIG 2

FIG 3

FIG 4

FIG 5

FIG 6

# FIG 7

FIG 8

EP 3 026 750 A1

FIG 9

FIG 10

FIG 11

**Europäisches Patentamt**
**European Patent Office**
**Office européen des brevets**

# EUROPÄISCHER RECHERCHENBERICHT

**Nummer der Anmeldung**

EP 14 19 5458

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/114594 A1 (SCHAEFER SASCHA [DE]) 24. April 2014 (2014-04-24) * Abbildungen 1-4 * * Absätze [0002], [0004], [0008], [0009] * * Absatz [0015] - Absatz [0033] * * Absatz [0036] - Absatz [0038] * * Ansprüche 1-20 * ----- | 1-18 | INV. H01M10/42 H01G9/00 H01G11/00 H01G11/04 H01G11/06 H01G17/00 H01M10/44 H01M12/00 |
| X | DE 10 2012 011604 A1 (VOLKSWAGEN AG [DE]) 12. Dezember 2013 (2013-12-12) * Absätze [0001], [0004], [0005] * * Absatz [0012] - Absatz [0018] * * Absätze [0023], [0027] * * Absatz [0036] - Absatz [0039] * * Absätze [0045], [0047], [0051] * ----- | 1,3,7-9, 11-18 | H01G15/00 H01M10/46 H02J7/00 |
| A | WO 2013/121721 A1 (MITSUBISHI JIDOSHA KOGYO KK) 22. August 2013 (2013-08-22) * Zusammenfassung; Abbildungen 1-6 * ----- | 1-18 | |
| A | EP 2 385 605 A2 (INFINEON TECHNOLOGIES AG [DE]) 9. November 2011 (2011-11-09) * Absätze [0001], [0003], [0006] * * Absatz [0022] - Absatz [0033] * * Absätze [0036], [0039] * * Absätze [0049], [0056], [0067] * * Abbildungen 1-5 * ----- | 1-18 | **RECHERCHIERTE SACHGEBIETE (IPC)** H01M H01G H02J |
| A | EP 2 518 860 A1 (NXP BV [NL]) 31. Oktober 2012 (2012-10-31) * Absatz [0001] - Absatz [0009] * * Absätze [0013], [0014] * ----- | 1-18 | |
| A | WO 2012/171197 A1 (HUAWEI TECH CO LTD [CN]; LIU WEI [CN]; LIU XINYU [CN]; SHUI WEI [CN]) 20. Dezember 2012 (2012-12-20) * Zusammenfassung * ----- | 1-18 | |

Der vorliegende Recherchenbericht wurde für alle Patentansprüche erstellt

| Recherchenort | Abschlußdatum der Recherche | Prüfer |
|---|---|---|
| München | 20. März 2015 | Fernandez Morales, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 19 5458

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-03-2015

| Im Recherchenbericht angeführtes Patentdokument | Datum der Veröffentlichung | Mitglied(er) der Patentfamilie | Datum der Veröffentlichung |
|---|---|---|---|
| US 2014114594 A1 | 24-04-2014 | CN 103779619 A<br>DE 102013108198 A1<br>US 2014114594 A1 | 07-05-2014<br>24-04-2014<br>24-04-2014 |
| DE 102012011604 A1 | 12-12-2013 | DE 102012011604 A1<br>WO 2013186021 A2 | 12-12-2013<br>19-12-2013 |
| WO 2013121721 A1 | 22-08-2013 | CN 104126263 A<br>EP 2816703 A1<br>JP 2013169055 A<br>WO 2013121721 A1 | 29-10-2014<br>24-12-2014<br>29-08-2013<br>22-08-2013 |
| EP 2385605 A2 | 09-11-2011 | CN 102306940 A<br>EP 2385605 A2<br>JP 5361935 B2<br>JP 2011244680 A<br>US 2011267005 A1 | 04-01-2012<br>09-11-2011<br>04-12-2013<br>01-12-2011<br>03-11-2011 |
| EP 2518860 A1 | 31-10-2012 | CN 102761155 A<br>EP 2518860 A1<br>US 2012274283 A1 | 31-10-2012<br>31-10-2012<br>01-11-2012 |
| WO 2012171197 A1 | 20-12-2012 | CN 102232261 A<br>WO 2012171197 A1 | 02-11-2011<br>20-12-2012 |

EPO FORM P0461

Für nähere Einzelheiten zu diesem Anhang : siehe Amtsblatt des Europäischen Patentamts, Nr.12/82